# EUROPEAN PATENT SPECIFICATION

(11) **EP 1 681 541 B1**
(45) Date of publication and mention of the grant of the patent: **04.05.2011**
(21) Application number: 06005167.9
(22) Date of filing: 30.09.2005
(51) Int. Cl.: G01J 3/02, G01J 3/46, G01N 21/25

(54) **Method and apparatus for improved colorimetry**
Verfahren und Vorrichtung für verbesserte Kolorimetrie
Procédé et appareil de colorimétrie améliorée

(30) Priority: 30.09.2004 US 614257 P; 15.02.2005 US 653048 P
(43) Date of publication of application: 19.07.2006
(62) Divisional of application: 05021441.0
(73) Proprietor: X-Rite Europe GmbH, 8105 Regensdorf (CH)
(72) Inventor: Lianza, Thomas A., Bedford, NH 03110 (US); Frederico, Richard A., Reading, MA 01867 (US); Lutz, Carl D., Auburn, NH 03032 (US)
(74) Representative: Schwabe - Sandmair - Marx

(56) References cited:
- US-A- 4 707 138
- US-A1- 2001 016 053
- US-A1- 2002 126 286
- US-A1- 2002 159 065
- US-A1- 2004 114 144
- US-B1- 6 505 775

## Description

### BACKGROUND

### Technical Field

The present disclosure relates to colorimeters, and more particularly, to a colorimeter with optical geometry and assembly that provides high a signal-to-noise ratio (SNR) and/or properly handles ambient light.

### Background Art

Colorimeters are accurate devices for measuring the spectral content of light emitted either directly or indirectly from a given source. Standards bodies such as the Video Electronics Standards Association (VESA) have been a driving force behind the development of colorimeter performance. The VESA 1.0 standard, for example, is primarily directed to specifying measurement of contrast ratio, and is limited to a no greater than +/- 2 degree viewing angle from the source to the sensor.

However, typical devices being measured, such as computer displays, are actually viewed from much greater angles than specified in the standards. To further exacerbate this situation, the degradation of spectral parameters that occurs with increased viewing angle, does not occur equally for all colors. Such incompatibilities have yet to be resolved or otherwise addressed. In addition, early devices developed under the standards were relatively costly. Such devices typically employ highly accurate measurement optics. Apertures have frequently been used in conjunction with lenses or other precision optical elements. Typical colorimeter configurations include a light sensing diode, and an integral lens that directs light to the sensor area.

More recent developments have produced designs resulting in low cost colorimeters with performance characteristics approaching or exceeding professional quality required by the standards. Such newer designs generally employ basic aperture geometry, and either non-overlapping or overlapping spectral ranges/filters. One such design uses a unique aperture plate that has oblong holes, and is spaced between the target surface and the filter/sensor set. The resulting field of view is about .+-.15 degrees or more on each axis.

However, such a design does not correspond to the field of view of the human eye. Rather, it is about four times too large. Also, the position of the aperture plate is spaced from the target surface by a mounting distance that is typically defined by one to four relatively large suction cups (i.e., one at each corner of the colorimeter housing). Such designs generally cause variations in the mounting distance due to leaking-based relaxation of the suction cups.

This variation, in conjunction with a fixed-distance between the aperture plate and the sensor, causes the field of view to vary as well, and adversely impacts the accuracy of color measurements taken.

In addition, colorimeter designs generally require alignment of the sensor to one or more optical paths. This alignment is typically provided by a secondary reference surface on the sensor diode. However, this sensor reference does not assure accurate alignment of the sensor in the plane parallel to the measured surface, and there is no means for locating the center of the senor lens to the center of the optical path. Such limitations contribute to undesirable decay of the SNR, as well as to inadequate color measurement accuracy.

While prior art colorimeters concentrated on measurement of what the sensor "sees", effects on perception resulting from ambient light impinging upon the source has eluded the existing colorimeter art. Colorimeter performance can be greatly degraded by ambient light effects of: 1) image perception of the human eye in the presence of varying ambient conditions, 2) ambient light reflected from the display screen integrated with the display screen image source, 3) flare, and other factors.

A metaphoric example of the types of perceived changes in "viewed monitor" systems in the presence of changing ambient light conditions follows below. When viewing automotive headlights in the daylight, they appear yellowish and dim. However, when viewing the headlights at night, they appear bright and white or blue white. This example highlights how important it is to calibrate for ambient light conditions in order to get quality results in a monitoring/viewing/measurement system.

In general, viewing a screen in dim ambient conditions leads to a perception of less color. If this in turn leads to arbitrary adjustment of the brightness control (when available such as with analog displays), system calibration can be severely hampered.

An attribute of a good colorimeter is the ability to anticipate the effects of ambient light on the source as perceived by the viewer and correct for such effects. Brightness controls on displays are notoriously non-linear. Uncalled for adjustment of brightness by the user can introduce severe degradation of contrast, linearity and perceived anomalies. Further image contrast and the ability to discern detail at different levels of image luminosity can be adversely affected by ambient illuminance of the area immediately adjacent to the image.

In one instance known to the inventors, a product distributor, LaCie, adapts only for intensity of ambient light, ignoring colorimetric content. However this solution also requires that the sensor be reversed to make the ambient reading. While it has been recognized that ambient light presents many problems and challenges to colorimeter measurement quality, to date the most sophisticated approaches are limited to taking a reading of the ambient at a point, and then depending on that measurement of ambient light for all ensuing ambient light compensation. Typically this is accomplished by turning the colorimeter away from the source image to take a reading of the ambient light. In some instances a diffuser is placed on the colorimeter to improve the specific and single measurement.

Previously disclosed embodiments of a colorimeter by the assignee of the present application measured ambient light by removing the colorimeter body from the image source screen, placing a diffuser on the viewing surface of the colorimeter, and orienting the combination away from the screen to get a reading estimate of the ambient light.

Nonlinearities of displays, complexity of color measurement, response of the human eye, effects of viewing room ambient conditions, measurement degradation due to extraneous other factors and the interactions between the factors make measurement and compensation challenging at the least. It is desired to maximize the S/N (signal/noise ratio) by controlling the ambient light effects within the system such as: flare, reflected light, extraneous light rays impinging on the sensor and numerous other sources of light impinging on the sensor that are not primary source generated rays. Therefore, a colorimeter is desired that takes into account the effects of ambient light impinging on the source image (LCD, CRT screen, etc.).

Further, there is a desire for making the colorimeter measurements agree more with the ambient light that impinges on the source image and reading the ambient light on an ongoing basis to make important corrections in a varying ambient light environment. It is further recognized that it would be a desirable feature of a colorimeter to be able to alert the user to real time changes in ambient viewing light that are deemed sufficient to effect the perceived attributes of the image.

In sum, an improved colorimeter design is desired having optimal or otherwise increased SNR, that has a field of view that corresponds to that of the human eye and that has the ability to continually sense ambient light impinging on the source image. In a more general sense, an improved colorimeter design is desired for accurately measuring color from the likes of displays, CRTs, LCDs, and printed or pictorial materials.

The United States patent application US 2002/0126286 A1 discloses a cable identifier apparatus and a corresponding method. It enables a fast identification of multi-wire or multi fibre cable. The method is based on illumination of colored buffer of the wire or fibre, registration of the reflected light and comparison of the measuring data with reference data stored in the memory. The reference data is loaded by measuring the color parameters of the buffer of known identification. The cable identifier apparatus comprises a portable hand-held device with a probe of fixing the buffer in a holder, illuminating the buffer, controlling the incident light and detecting the reflected light with photodetectors. The data is proceed by a microcontroller and an identification symbol of the buffer is displayed in LCD. The variation of the ambient light is compensated by separate measurement of dark and light signals from photodetectors.

The United States patent application US 2002/2002/0159065 A1 is directed to a portable colorimeter. It discloses a handheld, pen-like colorimeter for measuring the color of an object. The application comprises three light sensors, each of which detects a separate primary color. A microprocessor in the colorimeter calculates a single composite color value from the three separate color measurements from the light sensors and then compares the composite color value with the list of color values, wherein each value corresponds to a unique color name. The colorimeter selects the color name that matches the composite color value of the object present the color name to a user, by means of a light crystal display (LCD) or an audio speaker. Another embodiment of the present invention uses lasers emitting primary colors, rather than passive light sensors. The lasers shine on an object one at a time, and the reflected laser light from the three lasers is detected by a special light sensor. The three color measurements are then combined to produce a composite value, similar to the first embodiment.

US-2001/016053 A1 discloses an apparatus and method for producing a plurality of video signals to be processed by an image processor, where the video signals are representative of light reflected from a source region, such as a segment of an agricultural field. The apparatus includes a light receiving unit for receiving the light reflected from the source region and a multi-spectral sensor coupled to the light receiving unit for converting the light received by the light receiving unit into the video signals. The multi-spectral sensor includes a prism for dividing the light received by the light receiving unit into a plurality of light components, a plurality of light-detecting arrays each having a plurality of pixels for receiving the light components and producing electronic signals in response thereto, and a sensor control circuit for converting the electronic signals into video signals and for controlling the responsiveness of the pixels of the light detecting arrays to the light components. The light may be received by the light receiving unit at a variety of locations, such as on an agricultural vehicle, on an aircraft, or on a satellite. Also disclosed is use of an ambient light sensor to determine an ambient light level based upon which the video signals may be adjusted, and use of a light source to provide additional light to the source region. Further, an apparatus and method is disclosed for producing images of an agricultural field, based upon the video signals, that may be analyzed in real time for characteristics such as the nitrogen content of crops, and for storing such images for later analysis.

### SUMMARY OF THE INVENTION

The invention is defined by the subject-matter of the independent claims. The dependent claims are directed to advantageous embodiments.

### ADVANTAGES OF THE INVENTION

Advantageously, it is provided maximizing the signal-to-noise ratio of a colorimeter sensing light emitted from a target surface by matching the colorimeter' s field of view to that of the human eye for devices that measure target surfaces (e.g., displays, CRT's, LCD's, printed, and pictorial materials), commonly viewed by humans. Further, it is advantageously provided accounting for the effects on perception resulting from ambient light impinging upon the target surface.

Advantageously, it is provided a color sensing device for sensing light emitting from a target surface includes a chamber block having at least three overlapping spectral light passages extending through the chamber block configured to select a preferred field of view between the target surface and a corresponding sensor adapted to detect light from the target surface. Each light passage is configured having an entry orifice, exit orifice and an intermediate chamber. The entry orifice faces the target surface and is defined with an entry wall defining an entrance for emitted light from the target surface into the light passage. The exit orifice faces the sensor and is defined with an exit wall defining an exit for the emitted light from the light passage. The chamber intermediate the entry and exits walls is defined by a chamber wall having a diameter larger than a diameter of the entry and exit walls.

In another advantageous example, a color sensing device for sensing light emitting from a target surface includes three or more light sensors. Each sensor is configured to detect light from the target surface. The device includes a sensor locating element having three or more light passages and corresponding alignment features. Each alignment feature is adapted to receive a locating feature of a corresponding sensor, thereby aligning each sensor with a corresponding light passage. The device also includes a chamber block operatively coupled in alignment with the sensor locating element. The chamber block has three or more filter cavities and corresponding light passages. Each light passage is in alignment with a corresponding light passage of the sensor locating element. Each light passage is configured having an entry orifice, exit orifice and an intermediate chamber. The entry orifice faces the target surface and is defined with an entry wall defining an entrance for emitted light from the target surface into the light passage. The exit orifice faces the sensor and is defined with an exit wall defining an exit for the emitted light from the light passage. The chamber intermediate the entry and exits walls is defined by a chamber wall having a diameter larger than a diameter of the entry and exit walls. The device also includes three or more distinct light filter stacks including one or more filter elements. Each filter stack is placed in a corresponding one of the filter cavities, thereby providing three or more overlapping spectrally selective channels, with each spectrally selective channel designed to provide a pre-defined field of view between the target surface and a corresponding one of the light sensors. The

In another advantageous example, a color sensing device for sensing light emitting from a target surface includes a first housing; three or more light sensors disposed with the first housing and facing the target surface; a chamber block having at least three spectral light passages extending through the chamber block configured to select a preferred field of view between the target surface and a corresponding light sensor adapted to detect light from the target surface; and an ambient light sensor disposed at one of with and within the first housing facing ambient light impinging the target surface without the need to reorient the first housing relative to the target surface. The ambient sensor continuously reads the impinging light while the three or more light sensors simultaneously read the light attributes emanating from the target surface.

In another advantageous example, a method for simultaneously measuring ambient light illumination impinging on a target surface and attributes of the luminance emanating from the target surface is disclosed. The method includes reading luminance from the target surface using three or more light sensors disposed with a first housing and facing the target surface, each sensor configured with a lens and adapted to detect light from the target surface; and reading ambient light impinging on the target surface using an ambient light sensor disposed at one of with and within the first housing facing ambient light impinging the target surface without the need to reorient the first housing relative to the target surface. The ambient sensor continuously reads the impinging light while the three or more light sensors simultaneously read the light attributes emanating from the target surface.

Additional advantageous features and functions associated with the disclosed apparatus and method will be apparent from the detailed description which follows, particularly when viewed in conjunction with the appended figures.

### BRIEF DESCRIPTION OF THE DRAWINGS

So that those of ordinary skill in the art to which the subject disclosure pertains will more readily understand how to make and use the systems and methods described herein, aspects of preferred embodiments of the present disclosure will be described in detail with reference to the drawings, wherein:
Figure 1 is an exploded view of a HTF light tunnel sensor of a target colorimeter configured with a tube block in accordance with the prior art;
Figure 2 is a partial cross section view of the prior art tube block of Figure 1;
Figure 3 is a partial cross section view of a chamber block replacing the tube block of Figure 1, the chamber block illustrating a chamber and corresponding entry and exit orifices in accordance with the present disclosure;
Figure 4 is another cross section view of the chamber block of Figure 3 including an internal baffle disposed in the chamber according to the present disclosure;
Figure 5 is another cross section view of the chamber block of Figure 3 including an external baffle disposed outside the chamber block and proximate the entry orifice according to the present disclosure;
Figure 6 is a simplified schematic diagram illustrating a colorimeter for simultaneously measuring ambient light illumination impinging on a source image and the attributes of the luminance emanating from the source image in accordance with the present disclosure;
Figure 7 is a simplified schematic diagram of another colorimeter for simultaneously measuring ambient light illumination impinging on the source image and the attributes of the luminance emanating from the source image having a light-pipe directing the ambient light to an associated rear-facing sensor;
Figure 8 is a front perspective view of a colorimeter similar to the colorimeter shown in Figure 7 illustrating a plurality of light emitting diodes (LEDs) to indicate a status of the colorimeter to a user;
Figure 9 is a rear perspective view of the colorimeter of Figure 8 illustrating an external baffle with three apertures for receiving luminance emanating from the source image therethrough;
Figure 10 is an exploded front perspective view of Figure 8 illustrating a housing, PCB and light pipe of the colorimeter with a front cover removed;
Figure 11 is a front perspective view of the colorimeter of Figure 10 with the light pipe and front cover removed;
Figure 12 is an exploded rear perspective view illustrating an orientation of sensors, chamber, orifices and PCB after removing front and rear covers and the light-pipe from the colorimeter shown in Figure 11;
Figure 13 is a front perspective view of a colorimeter housing that can be affixed to a monitor (other than on a display screen) to conveniently hold the colorimeter when not in use; and
Figure 14 is a rear perspective view of the colorimeter housing of Figure 13.

### DETAILED DESCRIPTION OF EXEMPLARY EMBODIMENT(S)

Embodiments of the present invention provide colorimeters capable of measurement of emitted light from sources that are static such as LCD displays, illuminated printed or graphic matter, and/or temporally active such as CRT displays or strobed printed and graphic matter. The assembly and configuration of the device operates to maximize the signal-to-noise ratio (SNR), as well as to provide an optimal field of view that simulates the field of view of the human eye. Geometric elements and features of the device design, in conjunction with the assembly procedure, assure precise alignment of optical elements including sensors, filters, and other elements within the enclosure and optical path.

One particular embodiment of the device is configured with a viewing angle or field of view (FOV) in the range of +/- 5 to 7 degrees. This FOV is near optimum for achieving the desired performance for the low cost colorimeter, and effectively matches the human eye field of view. A chamber block element, which can be sized to fit into the existing products, has a number of light passage chambers, the chamber being configured relative to entry and exit orifices of each light passage is positioned, configured and dimensioned to meet the +/- 5 to 7 degree requirement to achieve the desired FOV. The chamber block can be molded from a material that minimizes reflectance of the chamber walls, thereby preserving the selected FOV.

In addition, the chamber block is configured with guide pins and a number of filter stack cavities which allow for alignment of the sensors and their respective molded lenses to the center of the optical field. The device components, such as the sensors, filters, printed circuit board (PCB), molded chamber block, housing, and other system elements can be assembled prior to soldering the sensors to the PCB. These self-aligning and pre-solder assembly qualities enable a significantly improved SNR relative to conventional devices e.g., four to five times higher).

Crushable ribs can be employed during assembly to provide a compliance that both preserves filter integrity, while simultaneously providing adequate clamping force to hold system elements in place. The device is not affected by mounting compliance or other variable factors. The design enables different filter sets to provide overlapping or non-overlapping spectrally selective channels. In operation, the colorimeter characterizes the measured target surface as the human eye would see it, including both the human eye's color response and field of view. In the case of a display screen, the device can be configured to detect the type of display. Thus, a low cost high accuracy colorimeter is provided.

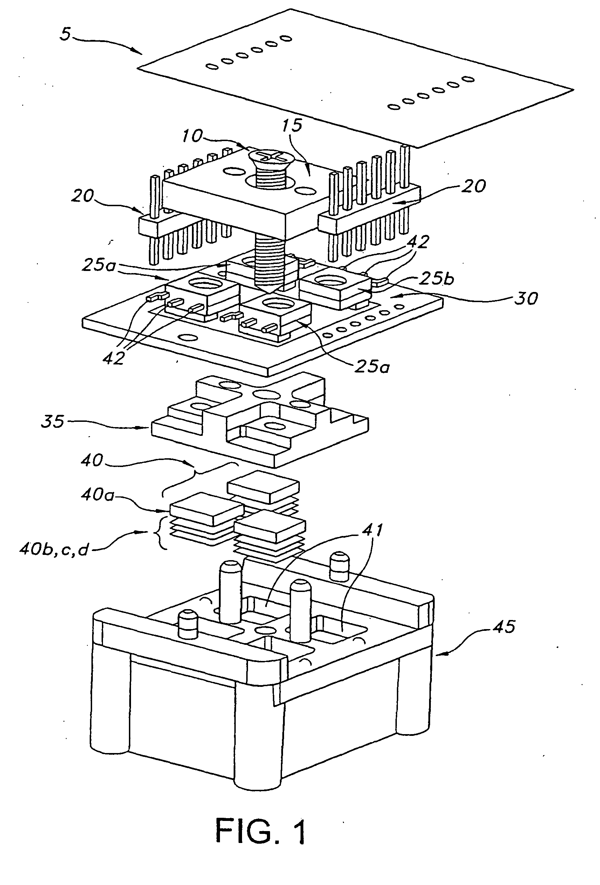

FIG. 1 is an exploded view of a prior art colorimeter assembly configured in accordance with one disclosed in U.S. Patent Publication No. 2004/0114144 A1, entitled "Colorimeter with High SNR". As can be seen, the assembly includes a sensor shield 5, a clamping screw 10, a clamping block 15, pin headers 20 and a corresponding PCB assembly 30, a number of sensors 25a-b, a sensor locating element 35, a number of filter stacks 40, and a tube block 45. Other components and features, such as a dust cover, cabling, and colorimeter circuitry, may also be included in the design as will be apparent in light of this disclosure.

The assembly procedure will be apparent from FIG. 1. Three filter stacks 40, each of which includes a glass layer 40a and three filter layers 40b-d, are placed in respective cavities of the tube block 45. Each cavity has a centrally located light passage that travels through the tube block 45 to allow intake of light from a target surface. The sensor locating element 35 is placed onto the tube block 45 via center guide pins to secure the filter stacks 40 in their cavities. The lead frame PCB assembly 30 is placed into position on the tube block 45 via a set of end guide pins. Three light-to-frequency sensors 25a and a light-to-voltage sensor 25b are placed in their respective positions, so that the lens of each sensor 25 is received into an lens alignment hole of the sensor locating element 35, thereby enabling filtered light to be received via the corresponding light passage. The clamping block 15 is placed over the sensors 25 via the guide pins of the tube block 45. The clamping screw 10 is torqued to secure the assembly. The sensor leads can then be soldered to the PCB assembly 30. Note that functional testing of the device can be performed before and/or after the soldering (assuming the unsoldered leads are in proper electrical contact). The sensor shield 5 can be installed over and/or around the clamping block 15 to prevent extraneous light from entering the back of the device, which reduces measurement accuracy. Also, a removable dust cover 5 can be coupled with the target surface side of the tube block 45 to protect the device until its use.

These particular sensor features are part of the manufacturer's design, and are accommodated by the designated features of the sensor locating element 35. In one particular embodiment, for example, sensors 25a are each a Texas Instruments TSL235 light-to-frequency converter, and sensor 25b is a Texas Instruments TSL250R light-to-voltage converter. It will be appreciated in light of this disclosure that other sensors types, shapes, and configurations can be used here as well.

Note that the clamping block 15 and the sensor locating element 35 can be fabricated in a similar fashion as the tube block 45 (e.g., a molded material having a low reflectance, such as black ABS/PC plastic). Further note that the overall assembly can be mated to a primary PCB which contains all ancillary circuits to accomplish colorimeter functions, such as spectral measurement, spectral translations to standard coordinate systems, integration of samples, determination of display type, timing, and other required functionality.

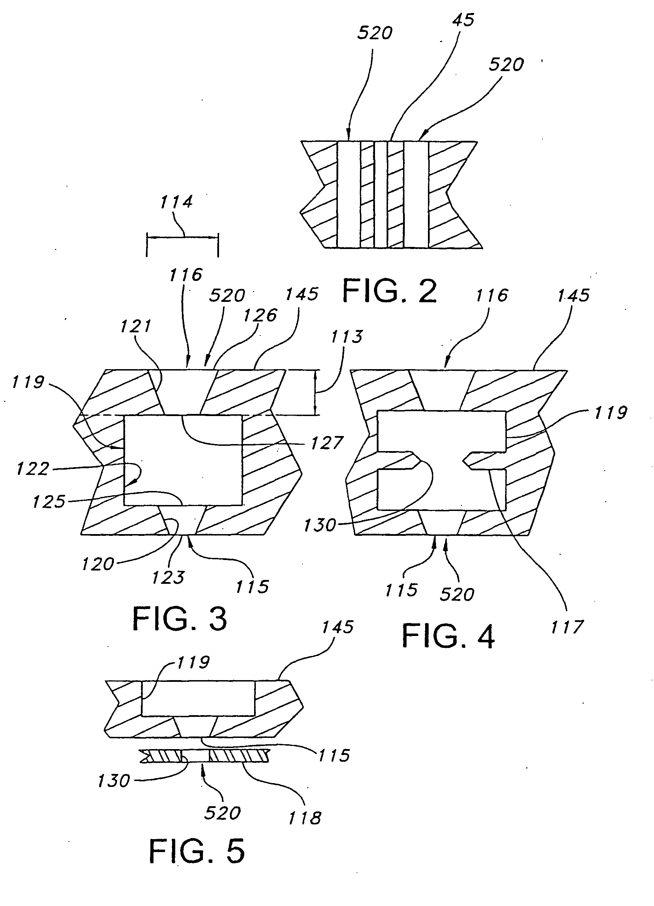

FIG. 2 is a cross sectional view of the tube block assembly 45 of FIG. 1 illustrating a pair of light passages 520 extending therethrough having a cylindrical or tube shape and having substantially the same diameter along a length thereof.

The inventors prior U.S. Patent Publication No. 2004/0114144 A1 describes a complete colorimeter with tile physical body geometry optimized for maximum SNR including an optical tube body (tube block member 45 of cited application), and further includes other mechanical, electronic and software elements as disclosed in U. S. Patent No. 5,892,585. Among the geometric features cited in the preceding was the statement: "The molded material for the tubes was filled material that minimized the reflectance of the walls of the tube, preserving the proper selection of the field of view." This was an important feature for maximizing SNR and a significant improvement over prior art. However, further research testing and evaluation has led to the conclusion that there was some residual reflection from the tube walls, which has been corrected by the refinement disclosed herein (e.g., replacing the cylindrical tube with a chamber with recessed walls and other features which may also include use of material with minimum reflectance).

As a further improvement, the inventors redesigned the tube block 45 by removing the walls of each tube, and replacing them with a respective chamber. The chamber was so designed that the entrance and exit orifices of each tube remained intact. This positioning and design of the orifices preserved two advantages of the tube geometry: 1) the ability to optimize for the angular field of view of the instrument, and 2) the rejection and elimination of light rays not traveling in the desired direction that would deteriorate the SNR if not eliminated. Further, the chamber is designed so that the walls of the chamber are oriented to minimize reflectance of extraneous rays from reaching the sensor. The tube block disclosed in the prior application from the inventors included a tube block element (45), consisting of cylindrical tubes from the entry orifice to the sensor of each optical channel of the colorimeter. In the exemplary embodiments disclosed herein, each tube is replaced with a chamber having recessed walls or larger diameter walls than the entry and exit orifices, with one chamber per sensing channel.

It has been found that by replacing the walled tube with remote-walled chambers, or recessed chambers, has further improved the SNR of the instrument by significantly reducing extraneous noise rays. An exemplary embodiment of the new chamber block is desirably molded as a two part chamber block consisting of a member with the chambers and respective front orifices and a member with respective rear orifices which also can be used to aid in the final positioning and alignment of the optical sensors. These two members constitute the chamber block cited herein as a significant improvement over the previously disclosed tube block while preserving all of the other features of the inventors prior art.

Further, in addition to replacement of each tube with a corresponding chamber, baffles may be added to further improve the SNR ratio. The baffles can be disposed either within the chambers or, outside of the chamber (as in proximity to the entrance and exit or both).

Referring now to Figure 3, a partial cross section view of a chamber block 145 is illustrated showing a light passage therethrough in accordance with an exemplary embodiment. It should be noted that chamber block 145 may be substituted for the tube block 45 of Figure 1. It will also be noted that referenced elements 110-119 represent the features of the improved geometry disclosed herein. Other elements referenced as elements 5-41 (with the exception of 110-119) are used to provide a description of the prior invention for which the new material disclosed herein pertains to the disclosed improvement.

The invention disclosed herein represents a collection of geometric parts and certain key features associated with these parts to optimize the field of view (favoring approach to that of the human eye response), SNR ratio, selection of materials and geometry with respect to reflectance, clamping of the assembly without deforming the filters, free floating of the sensors during clamping followed by soldering in place after clamping, providing dust protection and securing parts in place for ease of assembly.

As described above with reference to Figures 1 and 2, in conjunction with Figure 3, clamping block 15 has bump features (not shown) to apply a clamping pressure on the back of the sensor 25. Sensor 25 fits between clamping block 15 and sensor locating element 35. Sensor locating element 35 mates to sensor 25 with semicircular referencing lens alignment feature (not shown) forcing intimated contact with the reference lens alignment feature to establish alignment of the lens with the center of the remainder of the optical path consisting of elements: light passage 520, filter stacks 40, filter stack cavity 41 of chamber block 145, field control orifices 115, 116 of chamber block 145, and a clear dust cover or sensor shield 5. Further, a planar locating reference surface of sensor 25 mates with locating element planar reference surface of sensor locating element 35 to assure planar alignment of the sensor 25 parallel to the target surface or source image (not shown).

As inU.S. Patent Publication No. 2004/0114144 A1 lead frame/PCB assembly 30 positions the collection of optical elements between clamping block 15 and sensor locating element 35. It is so designed that it provides a soldering point for connecting sensor 25 to the system electronics.

Filter stack cavity 41 of chamber block 145 provides a means for accommodating a variety of filter combinations within filter stack 40 to characterize a measurement channel spectrally. Field control entry orifice 115 and exit orifice 116 of chamber block 145 have an optimally calculated and derived orifice diameter 114 and a length 113 that is determined by the respective orifice diameter 114 and calculations that derive the optimal field of view.

Clamping of the entire assembly, including clamping block 15, sensor(s) 25, sensor locating element 35 and chamber block 145, is accomplished by tightening clamping screw 10 to chamber block 145 and secured by screwing screw 10 into a threaded hole of the chamber block 145.

During this entire assembly process, the sensor 25 is free to float and locate as described in the clamping procedure description above with reference to Figure 1. Each of the sensors 25 becomes accurately aligned as a result of the design and the clamping action of tightening clamping screw 10. After clamping, the sensor leads 42 are soldered to the lead frame/PCB assembly 30. Dust cover or sensor shield 5 fits over the exposed surface of the colorimeter to block entry of dust and other contaminants.

Electrical tape is used at several locations during fabrication to facilitate assembly. The assembly discussed embodies all of the features of the invention. This assembly in turn mates to the system's primary PCB which contains all ancillary circuits to accomplish: spectral measurement, spectral translations to standard coordinate systems, integration of samples, determination of display type, timing, and other required elements.

Also necessary to the successful operation of the invention are a number of software and firmware routines that the inventors have developed to achieve the objectives of the invention with optimum performance. These software, firmware, and circuit functions are largely described in U.S. Patent No. 5,892,585.

Referring again to Figure 3, one exemplary embodiment of the chamber block 145 is illustrated for use with a color sensing device for sensing light emitted from a target surface. Chamber block 145 includes at least three overlapping spectral light passages 520 (only one shown) extending through the chamber block 145 configured to select a preferred field of view between the target surface and a corresponding sensor 25 adapted to detect light from the target surface. Each light passage 520 includes entry orifice 115 facing the target surface (not shown). The entry orifice 115 is defined with an entry wall 120 defining an entrance for emitted light from the target surface into the light passage 520. The exit orifice 116 facing a respective sensor 25 is defined with an exit wall 121defining an exit for the emitted light from the light passage 520. The chamber 119 is disposed intermediate the entry and exits walls 120, 121, respectively. The chamber 119 is defined by a chamber wall 122 having a diameter larger than a diameter of either of the entry and exit walls 120, 121, respectively. Figure 3 illustrates that both the entry and exit walls 120, 121 each form a frustoconical orifice. However, it is contemplated that one or the other may be cylindrical, or both be cylindrical, having a substantially constant diameter along a length thereof.

In an exemplary embodiment, as shown, the entry orifice 115 is defined with an entry opening 123 to the chamber block 145 having a diameter smaller than a first opening 125 to the chamber 119. Further, the exit orifice 116 is defined with an exit opening 126 to the chamber block 145 having a diameter larger than a second opening 127 to the chamber 119. The first and second openings 125, 127 defining opposite openings of the chamber 119 connected to the entry and exit walls, respectively.

As best seen with reference to Figure 5, the chamber block 145 may be a two part separable chamber block 145. More specifically, chamber block 145 is desirably molded as a two part chamber block comprising two separable members to aid in the final positioning and alignment of the optical sensors. Further, with reference to Figures 4 and 5, the chamber block may include a baffle 117, 118 having an aperture 130 aligned with the light passage 520 of the block 145. The baffle 117, 118 may be disposed inside the chamber 119 (Figure 4) or outside the chamber 119 in proximity of the entry or exit orifices 115, 116, respectively, (Figure 5) to eliminate or minimize extraneous light rays that might reach the sensor 25 and degrade the signal-to-noise ratio.

Figure 4 depicts the baffle 117 disposed inside the chamber 119. Further, the corresponding aperture thereof is defined by a by countersink on opposite surfaces defining the baffle 117. Figure 5 depicts the baffle disposed outside the block 145 and spaced from a respective corresponding entry orifice 115.

The principles of the present disclosure discussed above may be employed by any colorimeter or similar sensing device. One such colorimeter design is described in detail in U.S. Patent No. 5,892,585. Note that a number of software and firmware routines can be used to achieve optimum colorimeter performance. Example software, firmware, and circuit functions are also described in the U.S. Patent No. 5,892,585. Generally, a colorimeter is designed to simulate the color response of a human eye. An RGB result is calculated based on the colorimeter channel outputs (e.g., X, Y, and Z).

In addition, mounting techniques can be employed to further improve the device performance, such as the mounting techniques described in U.S. patent publications no. 2004/0075032 and 2004/0080749..

As discussed above in the background, it has been recognized that ambient light presents many problems and challenges to colorimeter measurement quality. To date the most sophisticated approaches are limited to taking a reading of the ambient at a point and then depending on that measurement for all ensuing ambient light compensation. Typically this is accomplished by turning the colorimeter away from the source image to take a reading of the ambient light. In some instances a diffuser is placed of the colorimeter to improve the specific and single measurement.

The applicants recognize the need to maximize the signal-to-noise ratio of any colorimeter and address matching the colorimeter's field of view to that of the human eye for devices that measure targets (displays, CRT's, LCD's, printed, and pictorial materials, for example, but not limited thereto) commonly viewed by humans, and further the need to compensate for the effects of ambient light reaching the sensor. Still further, the applicants recognize that if one could compensate for the perception of the human eye in the presence of ambient light impinging on the image source that a significant step forward in the state of colorimetry would be achieved. This area has been addressed and significant improvements have been added to colorimetry by adding the capability to read ambient light (specifically that light that is impinging upon the image source) in real time and developing supporting algorithms to compensate for deleterious effects.

As noted above, prior art colorimeters measure ambient light by removing the colorimeter body from the image source screen, placing a diffuser on the viewing surface of the colorimeter, and orienting the combination away from the screen to get a reading estimate of the ambient light.

The present invention disclosed herein orients a rear facing ambient sensor on the main printed circuit board (PCB). The rear facing ambient sensor is capable of viewing the incoming ambient light while a set of forward facing color sensors simultaneously read the luminance emanating from the image screen. The ambient viewing path can be in the form of a chamber and orifice or can be fitted with a light-pipe, both means accomplish measurement of the ambient light in a manner that closely matches the incoming direction of most closely captures the effective characteristics of the ambient light. Alternatively, LEDs can be included to provide feedback information including but not limited to: 1) status such as when the colorimeter is calibrating, 2) when there has been a significant change in ambient light.

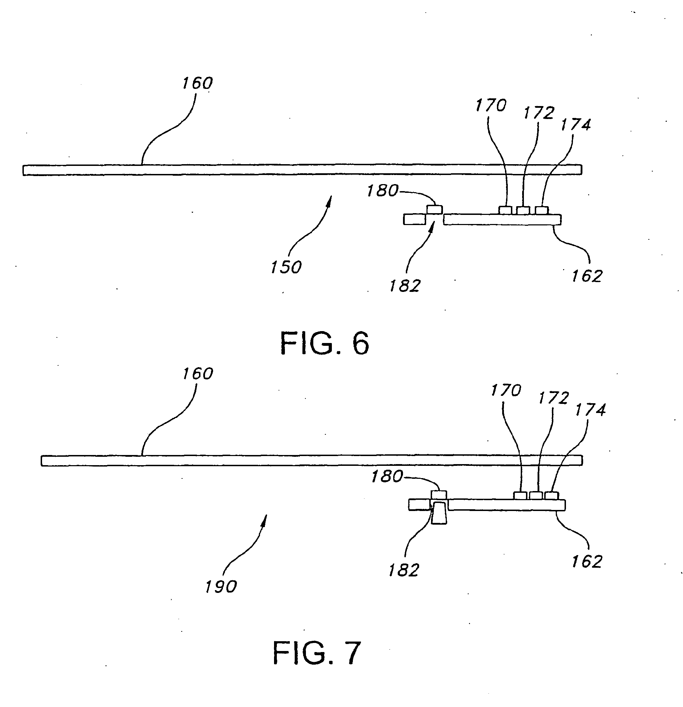

Figure 6 is a simplified schematic of a system 150 for simultaneously measuring ambient light illumination impinging on a source image 160 and the attributes of the luminance emanating from the source image 160. In the embodiment shown, source image 150 is an image displayed on a monitor. System 150 includes a primary colorimeter PCB 162 with sensors 170, 172, and 174 facing the source image 160 to make component readings of the luminance emanating from the source image 160. An ambient sensor 180 faces rearward viewing ambient light impinging on the surface of the source image 160. An aperture or chamber 182 allows passage of the ambient light to the associated rear-facing sensor 180 operably coupled to PCB 162.

Figure 7 is simplified schematic of a system 190 for simultaneously measuring ambient light illumination impinging on the source image 160 and the attributes of the luminance emanating from the source image 160 in accordance with an exemplary alternative embodiment. Just as in Figure 6, the primary colorimeter PCB 162 is operably connected to the sensors 170, 172 and 174 facing the source image 160 to make component readings of the luminance emanating from the source image 160. In addition, the ambient sensor 180 faces rearward viewing ambient light impinging on the source image surface 160. A light pipe 194 is disposed within aperture 182 and directs the ambient light to the associated rear-facing sensor 180 operably coupled to the PCB 162.

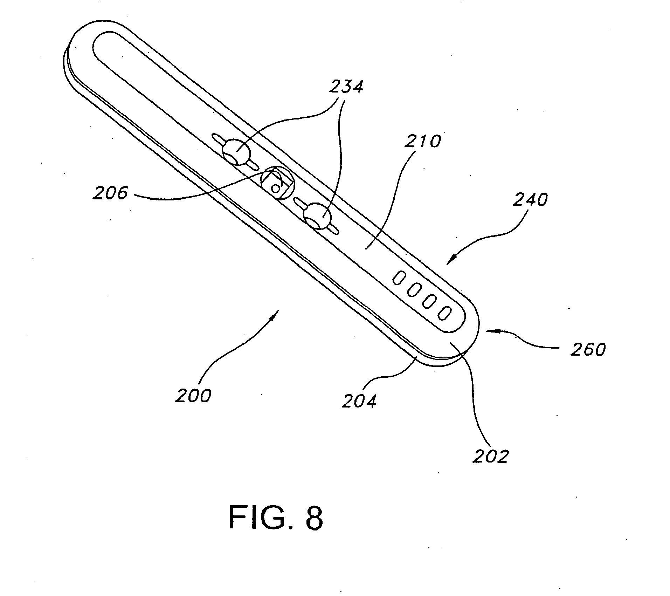

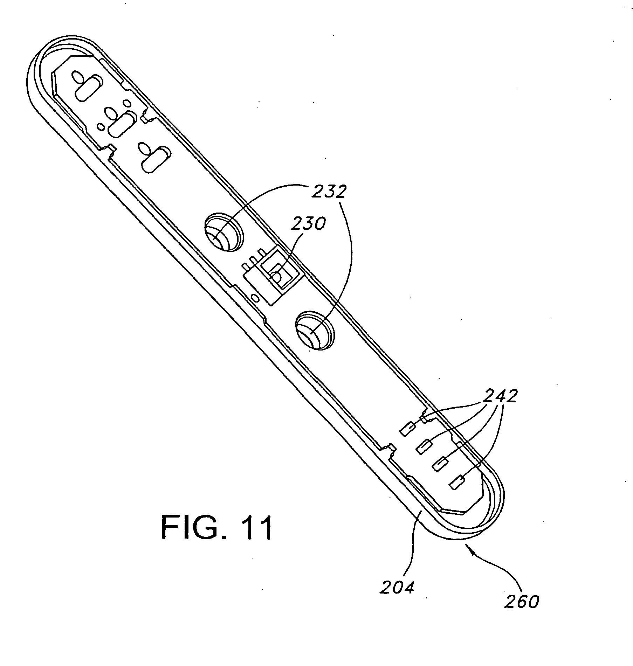

Referring now to Figures 8-12, a colorimeter 200 embodying the elements described with respect to Figures 6 and 7 is illustrated. Colorimeter 200 includes a front cover 202 and a rear cover 204 housing components associated with colorimeter 200. The front cover 202 faces the impinging ambient light while the back cover 204 faces the source image (not shown). The front cover 202 is configured to receive a light pipe 210 for receiving the impinging ambient light. The light pipe 210 includes a lens 206 for directing impinging light to an ambient light sensor aligned therewith. A major portion of the light pipe 210 is shown having an exposed surface that is substantially flush with front cover 202, however, other suitable configurations are contemplated.

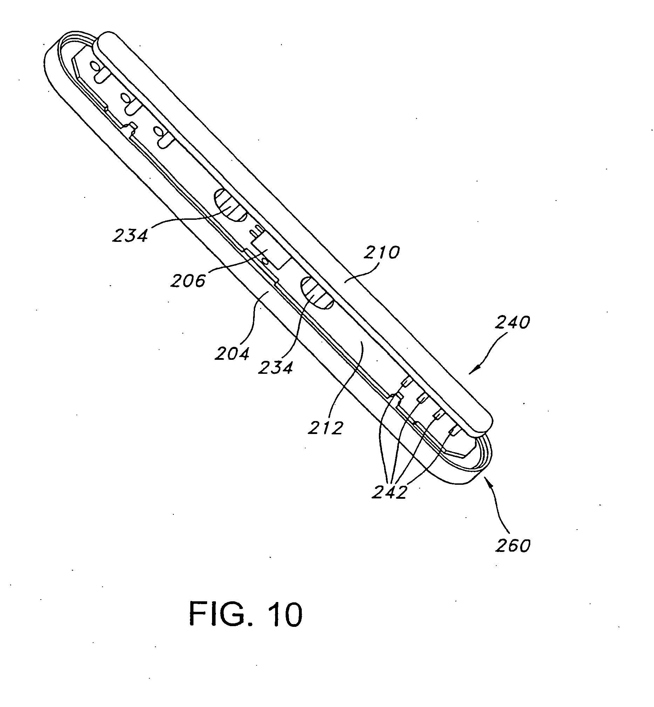

The front and rear covers 202 and 204 enclose a PCB 212 disposed intermediate the light pipe 210 and rear cover 204 as best seen in Figure 10. PCB 212 is a primary colorimeter PCB with sensors 220, 222, and 224 facing the source image (not shown) to make component readings of the luminance emanating from the source image. An ambient sensor 230 faces ambient light impinging on the surface of the source image. The ambient sensor 230 is a light tight package that receives the ambient light directed at the source image and impinging the lens 206 of light pipe 210. A pair of corresponding apertures 232 defined by PCB 212 allow corresponding light pipe cylinders 234 extending from light pipe 210 to extend therethrough to the rear cover 204. Each cylinder 234 is capped with a clear plastic lens 236 Each lens 236 and cylinder 234 allows passage of the light emitted from the source image to pass through the PCB 212 and direct the same to the ambient sensor 230 located on an opposite surface side of the PCB 212 where the three sensors 220, 222 and 224 are disposed.

A means to indicate the status of colorimeter 200 (e.g., calibration) or indicate a change in the ambient illumination may be disposed at an opposite end of the colorimeter from which the sensors 220, 222 and 224 are disposed. The indicating means 240 may include a plurality of LEDs or other display means known in the art to indicate a status or parameter. In an exemplary embodiment, four differently colored LEDs are indicated generally at 242. Depending on which of the differently colored LEDs are lit, one or more lit LEDs or a sequence thereof may indicate the status of calibration or re-calibration of colorimeter 200 and/or indicate that there has been a predetermined change in ambient illumination, for example. However, other parameters or status conditions may be indicated as well.

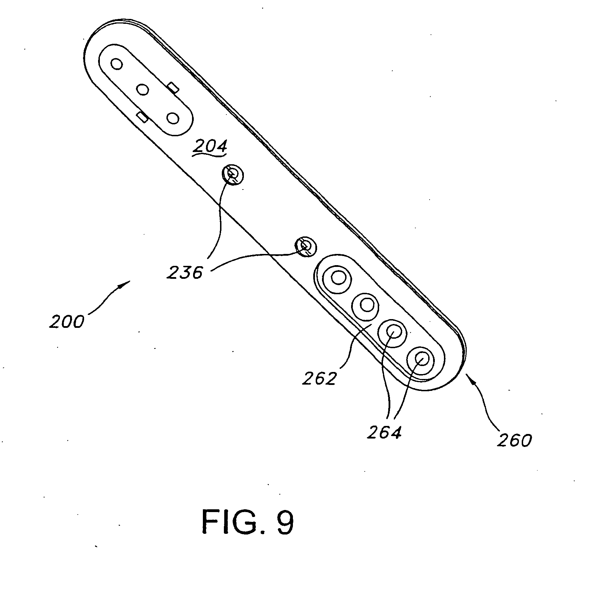

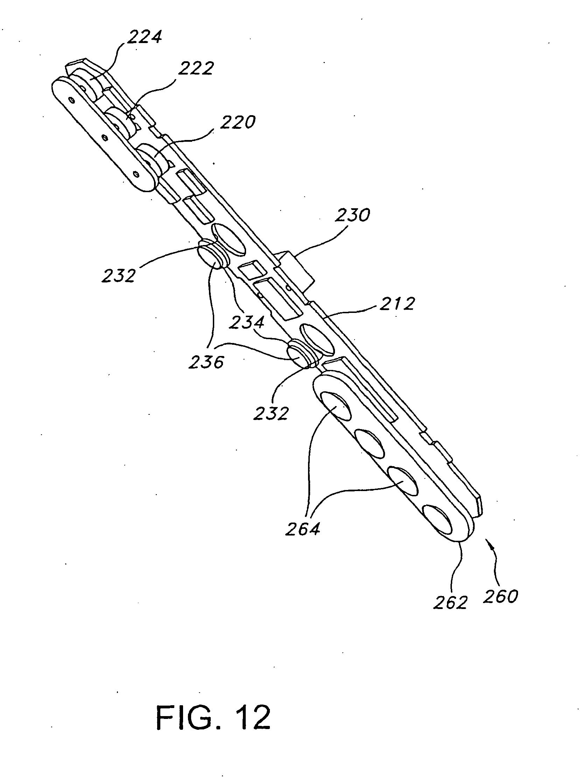

As best seen with reference to Figures 9 and 12, rear cover 204 is configured to receive an external baffle 250 having three apertures 252, 254 and 256 aligned with a respective sensor 220, 222 and 224. The external baffle 250 is illustrated as being substantially flush with a rear surface defining the rear cover 204, but other suitable configurations (e.g., recessed or raised from rear cover 204) are contemplated. The external baffle 250 further defines the field of view for sensors 220, 222 and 224. At an opposite end of the rear cover 204 indicated generally at 260, an attachment means 262 is exposed for attaching the colorimeter 200 to a display monitor (not shown). In an exemplary embodiment as depicted, the attachment means includes a plurality of suction cups (four shown) 264 for releasable attachment to the display surface of the monitor. As shown, the plurality of suction cups are serially aligned with respect to one another, however, other configurations are contemplated. Attachment means 262 may include any known releasable affixing device that allows the colorimeter to be attached to the image source without damage to the same.

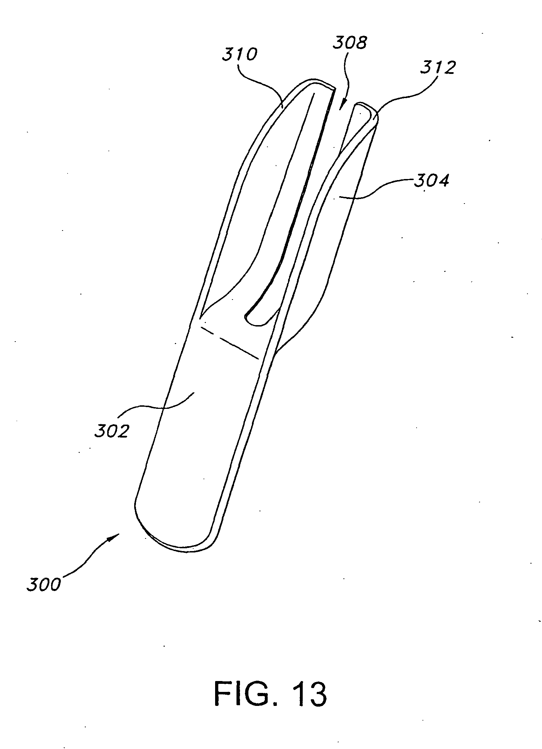

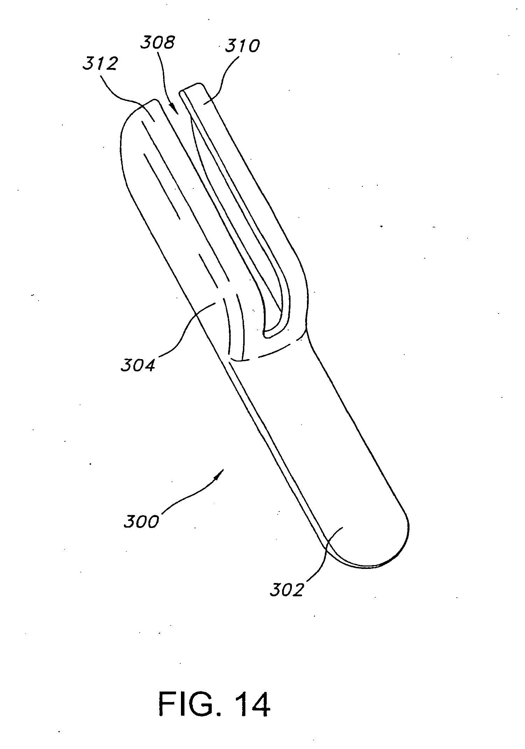

Referring now to Figures 13 and 14, a housing 300 for holding the colorimeter of Figures 8-12 is illustrated. Housing 300 is configured to be affixable to the source image, for example a display monitor other than the display screen, when the colorimeter 200 is not in use. Housing 300 includes a first member 302 and a second member 304 extending from the first member 302. The first member 302 is substantially planar for providing a surface to be affixed to a monitor, for example. The second member 304 extending from the first member 302 is configured to receive at one of the two longitudinal ends defining the colorimeter 300. More specifically, second member 304 is contoured having a similar contour to the end 260 defined by the either the front or rear covers 202, 204, respectively. Further, the second member 304 includes a longitudinal groove 308 substantially bisecting the second member 304 into first and second portions 310 and 312, respectively. The first and second portions 310 and 312, respectively, then can be resiliently displaced relative to each other to releasably receive and secure the colorimeter 200 therewith when not in use. In addition, the plurality of serially aligned suction cups 264 disposed in the second member 304 may provide a tacky surface to provide releasable positive grip between the colorimeter 200 and housing 300.

Measuring the effects of ambient light impinging on a source image and correcting either statically, dynamically in real-time, or both provide significant further improvement to the ability of a colorimeter to provide optimum image processing. Among the relative few low cost implementations of colorimeters, an improved colorimeter results from the present invention discussed herein seamlessly integrated with prior work performed by the applicants. Prior work includes development of software, firmware, algorithms and circuits (largely presented in U.S. Patent No. 5,892,585 and in U.S. Patent Publication No. 2004/0114144. The result is to provide a significant improvement in accuracy, repeatability and other factors of effective colorimetry.

While the invention has been described with respect to specific exemplary embodiments set forth herein, those skilled in the art will readily appreciate that various modifications, changes, and enhancements may be made thereto. The foregoing description of the embodiments of the invention has been presented for the purposes of illustration and description. It is not intended to be exhaustive or to limit the invention to the precise form disclosed. Many modifications and variations are possible in light of this disclosure.

## Claims

1. A color sensing device for sensing light emitted from a target surface (160) such as displays, CRT's, LCD's, printed, and pictorial materials, the device comprising:
a first housing;
three or more light sensors (170, 172, 174) disposed with the first housing and facing the target surface (160);
a chamber block (145); said chamber block (145) having at least three spectral light passages (520) extending through the chamber block (145) configured to allow intake of light from the target surface (160) and to select a preferred field of view between the target surface (160) and a corresponding light sensor (170, 172, 174) adapted to detect light from the target surface (160);
**characterized by**
each light passage (520) including an entry orifice (115) defined with an entry wall (120) defining an entrance for emitted light from the target surface (160) into the light passage (520), an exit orifice (116) defined with an exit wall (121) defining an exit for the emitted light from the light passage (520) and a chamber (119) disposed intermediate the entry wall (120) and the exit wall (121), the chamber being defined by a chamber wall (122) having a diameter larger than a diameter of either the entry wall (120) and the exit wall (121), respectively;
an ambient light sensor (180);
said ambient light sensor (180) disposed within the first housing facing ambient light impinging the target surface (160) without the need to reorient the first housing relative to the target surface (160),
wherein the ambient sensor (180) continuously reads the impinging light while the three or more light sensors (170, 172, 174) simultaneously read the light attributes emanating from the target surface (160); and
the ambient light sensor (180) is arranged rearwards with respect to the one or more light sensors (170, 172, 174) to receive ambient light directed towards the target surface (160).

2. The color sensing device of claim 1, wherein the ambient light sensor (180) faces the impinging ambient light and the three or more light sensors (170, 172, 174) face the target surface (160) allowing for simultaneous reading of the target surface (160) attributes and the impinging ambient light with the first housing is in a fixed position relative to the target surface (160).

3. The color sensing device of one of claims 1 or 2, further comprising a feedback means for providing feedback to a user indicative of when re-calibration or other operation is being performed by the color sensing device or when there is a predetermined change in measurement of the impinging ambient light.

4. The color sensing device of claim 3, wherein the feedback means includes one or more LEDs disposed at the first housing visible to the user.

5. The color sensing device of claim 4, wherein different LED colors are used to provide additional content of the feedback.

6. The color sensing device of one of claims 1 to 5, wherein the first housing includes an optical path that captures ambient light of the same nature and direction of that impinging on the target surface and directs the same to the ambient light sensor.

7. The color sensing device of claim 6, wherein the optical path includes a light pipe element configured to capture the impinging ambient light and provide the same to the ambient light sensor.

8. The color sensing device of one of claims 1 to 7, further comprising a second housing, the second housing affixable to a display device and configured to releasably receive the first housing when the device is not being used.

9. A method for simultaneously measuring ambient light illumination impinging on a target surface (160) and attributes of the luminance emanating from the target surface (160), the method is **characterized by** the following steps:
providing a chamber block (145) having at least three light passages (520) extending through the chamber block (145) configured to allow intake of light from the target surface (160) and to select a preferred field of view between the target surface (160) and three or more light sensors (170, 172, 174) adapted to detect light from the target surface (160);
reading luminance from the target surface (160) using said three or more light sensors (170, 172, 174) disposed with a first housing and facing the target surface (160), each sensor (170, 172, 174) configured with a lens; each light passage (520) including an entry orifice (115) defined with an entry wall (120) defining an entrance for emitted light from the target surface (160) into the light passage (520), an exit orifice (116) defined with an exit wall (121) defining an exit for the emitted light from the light passage (520) and a chamber (119) disposed intermediate the entry wall (120) and the exit wall (121), the chamber being defined by a chamber wall (122) having a diameter larger than a diameter of either the entry wall (120) and the exit wall (121), respectively;
**characterized by**:
reading ambient light impinging on the target surface (160) using an ambient light sensor (180) disposed within the first housing facing ambient light impinging the target surface (160) without the need to reorient the first housing relative to the target surface (160),
wherein the ambient sensor (180) continuously reads the impinging light while the three or more light sensors (170, 172, 174) simultaneously read the light attributes emanating from the target surface (160); and
wherein the ambient light sensor (180) is arranged rearwards with respect to the one or more light sensors (170, 172, 174) to receive ambient light directed towards the target surface (160).

## Patentansprüche

1. Farbabfühlvorrichtung, um Licht, das von einer Zieloberfläche (160) wie etwa von Anzeigen, CRTs, LCDs, gedruckten und bildlichen Materialien emittiert wird, abzufühlen, wobei die Vorrichtung umfasst:
ein erstes Gehäuse;
drei oder mehr Lichtsensoren (170, 172, 174), die in dem ersten Gehäuse angeordnet sind und der Zieloberfläche (160) zugewandt sind;
einen Kammerblock (145); wobei der Kammerblock (145) wenigstens drei Spektrallichtdurchlässe (520) besitzt, die durch den Kammerblock (145) verlaufen und konfiguriert sind, um einen Lichteintritt von der Zieloberfläche (160) zuzulassen und um ein bevorzugtes Gesichtsfeld zwischen der Zieloberfläche (160) und einem entsprechenden Lichtsensor (170, 172, 174), der dazu ausgelegt ist, Licht von der Zieloberfläche (160) zu detektieren, auszuwählen;
**dadurch gekennzeichnet, dass**
wobei jeder Lichtdurchlass (520) eine Eintrittsblende (115), die durch eine Eintrittswand (120) definiert ist, die einen Eintritt für von der Zieloberfläche (160) emittiertes Licht in den Lichtdurchlass (520) definiert, eine Austrittsblende (116), die durch eine Austrittswand (121) definiert ist, die einen Austritt für das von dem Lichtdurchlass (520) emittierte Licht definiert, und eine Kammer (119), die zwischen der Eintrittswand (120) und der Austrittswand (121) angeordnet ist, umfasst, wobei die Kammer durch eine Kammerwand (122) definiert ist, die einen Durchmesser besitzt, der größer ist als ein Durchmesser der Eintrittswand (120) bzw. der Austrittswand (121);
ein Umgebungslichtsensor (180) vorgesehen ist;
der Umgebungslichtsensor (180) in dem ersten Gehäuse angeordnet ist und Umgebungslicht zugewandt ist, das auf die Zieloberfläche (160) auftrifft, ohne dass das erste Gehäuse relativ zu der Zieloberfläche (160) umorientiert werden muss,
wobei der Umgebungssensor (180) das auftreffende Licht ununterbrochen liest, während die drei oder mehr Lichtsensoren (170, 172, 174) gleichzeitig die Lichtattribute lesen, die von der Zieloberfläche (160) ausgehen; und
der Umgebungslichtsensor (180) in Bezug auf den einen oder die mehreren Lichtsensoren (170, 172, 174) rückwärts angeordnet ist, um Umgebungslicht zu empfangen, das zu der Zieloberfläche (160) gerichtet ist.

2. Farbabfühlvorrichtung nach Anspruch 1, wobei der Umgebungslichtsensor (180) dem auftreffenden Umgebungslicht zugewandt ist und die drei oder mehr Lichtsensoren (170, 172, 174) der Zieloberfläche (160) zugewandt sind, um ein gleichzeitiges Lesen der Attribute der Zieloberfläche (160) und des auftreffenden Umgebungslichts zuzulassen, wenn das Gehäuse relativ zu der Zieloberfläche (160) in einer festen Position ist.

3. Farbabfühlvorrichtung nach einem der Ansprüche 1 oder 2, die ferner Rückkopplungsmittel umfasst, um für einen Anwender eine Rückkopplung zu schaffen, die angibt, wenn eine Neukalibrierung oder eine andere Operation durch die Farbabfühlvorrichtung ausgeführt wird oder wenn eine vorgegebene Änderung der Messung des auftreffenden Umgebungslichts erfolgt.

4. Farbabfühlvorrichtung nach Anspruch 3, wobei die Rückkopplungsmittel eine oder mehrere LEDs aufweisen, die bei dem ersten Gehäuse angeordnet und für den Anwender sichtbar sind.

5. Farbabfühlvorrichtung nach Anspruch 4, wobei verschiedene LED-Farben verwendet werden, um für die Rückkopplung einen zusätzlichen Inhalt zu schaffen.

6. Farbabfühlvorrichtung nach einem der Ansprüche 1 bis 5, wobei das erste Gehäuse einen optischen Weg enthält, der Umgebungslicht derselben Art und Richtung wie jenes, das auf die Zieloberfläche auftrifft, einfängt und dieses zu dem Umgebungslichtsensor lenkt.

7. Farbabfühlvorrichtung nach Anspruch 6, wobei der optische Weg ein Lichtrohrelement umfasst, das konfiguriert ist, um das auftreffende Umgebungslicht einzufangen und um dieses für den Umgebungslichtsensor bereitzustellen.

8. Farbabfühlvorrichtung nach einem der Ansprüche 1 bis 7, die ferner ein zweites Gehäuse umfasst, wobei das zweite Gehäuse an einer Anzeigevorrichtung befestigt werden kann und konfiguriert ist, um das erste Gehäuse abnehmbar aufzunehmen, wenn die Vorrichtung nicht in Verwendung ist.

9. Verfahren zum gleichzeitigen Messen einer Umgebungslichtbeleuchtung, die auf eine Zieloberfläche (160) auftrifft, und von Attributen der Luminanz, die von der Zieloberfläche (160) ausgeht, wobei das Verfahren **gekennzeichnet ist durch** die folgenden Schritte:
Vorsehen eines Kammerblocks (145), der wenigstens drei Lichtdurchlässe (520) besitzt, die **durch** den Kammerblock (145) verlaufen und konfiguriert sind, um einen Lichteintritt von der Zieloberfläche (160) zuzulassen und um ein bevorzugtes Gesichtsfeld zwischen der Zieloberfläche (160) und drei oder mehr Lichtsensoren (170, 172, 174), die dazu ausgelegt sind, Licht von der Zieloberfläche (160) zu detektieren, auszuwählen;
Lesen der Luminanz von der Zieloberfläche (160) unter Verwendung der drei oder mehr Lichtsensoren (170, 172, 174), die in einem ersten Gehäuse angeordnet und der Zieloberfläche (160) zugewandt sind, wobei jeder Sensor (170, 172, 174) mit einer Linse konfiguriert ist;
wobei jeder Lichtdurchlass (520) eine Eintrittsblende (115), die **durch** eine Eintrittswand (120) definiert ist, die einen Eintritt für von der Zieloberfläche (160) emittiertes Licht in den Lichtdurchlass (520) definiert, eine Austrittsblende (116), die **durch** eine Austrittswand (121) definiert ist, die einen Austritt für das von dem Lichtdurchlass (520) emittierte Licht definiert, und eine Kammer (119), die zwischen der Eintrittswand (120) und der Austrittswand (121) angeordnet ist, umfasst, wobei die Kammer **durch** eine Kammerwand (122) definiert ist, die einen Durchmesser besitzt, der größer ist als ein Durchmesser der Eintrittswand (120) bzw. der Austrittswand (121);
**gekennzeichnet durch**:
Lesen von Umgebungslicht, das auf die Zieloberfläche (160) auftrifft, unter Verwendung eines Umgebungslichtsensors (180), der in dem ersten Gehäuse angeordnet ist und dem Umgebungslicht zugewandt ist, das auf die Zieloberfläche (160) auftrifft, ohne dass das erste Gehäuse relativ zu der Zieloberfläche (160) umorientiert werden muss,
wobei der Umgebungssensor (180) das auftreffende Licht ununterbrochen liest, während die drei oder mehr Lichtsensoren (170, 172, 174) gleichzeitig die Lichtattribute lesen, die von der Zieloberfläche (160) ausgehen; und
wobei der Umgebungslichtsensor (180) in Bezug auf den einen oder die mehreren Lichtsensoren (170, 172, 174) rückwärts angeordnet ist, um Umgebungslicht zu empfangen, das zu der Zieloberfläche (160) gerichtet ist.

## Revendications

1. Dispositif de détection de couleur pour la détection des émissions lumineuses émises depuis une surface cible (160) telle que des écrans, des écrans TRC, des écrans LCD, des matériaux imprimés et graphiques, le dispositif comprenant :
un premier logement ;
trois capteurs de lumière ou plus (170, 172, 174), disposés dans le premier logement et orientés face à la surface cible (160) ;
un bloc de chambre (145) ; ledit bloc de chambre (145) comprenant au moins trois passages lumineux spectraux (520) s'étendant à travers le bloc de chambre (145) configuré pour permettre l'entrée de lumière depuis la surface cible (160) et pour sélectionner un champ visuel préféré entre la surface cible (160) et un capteur de lumière correspondant (170, 172, 174) adapté pour détecter la lumière provenant de la surface cible (160) ;
**caractérisé par**
chaque passage lumineux (520) comprenant un orifice d'entrée (115) défini par une paroi d'entrée (120) définissant une entrée pour la lumière émise depuis la surface cible (160) dans le passage lumineux (520), un orifice de sortie (116) défini avec une paroi de sortie (121) définissant une sortie pour la lumière émise depuis le passage lumineux (520) et une chambre (119) disposée entre le paroi d'entrée (120) et la paroi de sortie (121), la chambre étant définie par une paroi de chambre (122) ayant un diamètre supérieur à soit le diamètre de l'orifice d'entrée (120) soit celui de l'orifice de sortie (121), respectivement ;
un capteur de lumière ambiante (180) ;
ledit capteur de lumière ambiante (180) étant disposé dans le premier logement et orienté face à la lumière ambiante incidente sur la surface cible (160) sans qu'il n'y ait besoin de réorienter le premier logement par rapport à la surface cible (160).
**caractérisé en ce que** le capteur ambiant (180) lit en continu la lumière incidente pendant que les trois capteurs de lumière ou plus (170, 172, 174) lisent simultanément les attributs de lumière émanant de la surface cible (160) ; et
le capteur de lumière ambiante (180) est disposé en arrière par rapport à un ou plusieurs capteurs de lumière (170, 172, 174) pour recevoir la lumière ambiante dirigée vers la surface cible (160).

2. Dispositif de détection de couleur selon la revendication 1, dans lequel le capteur de lumière ambiante (180) est orienté face à la lumière ambiante incidente et les trois capteurs de lumière ou plus (170, 172, 174) sont orientés face à la surface cible (160) permettant la lecture simultanée des attributs de la surface cible (160) et la lumière ambiante incidente dans le premier logement, est dans une position fixe par rapport à la surface cible (160).

3. Dispositif de détection de couleur selon la revendication 1 ou 2, comprenant également un moyen de feedback pour fournir un feedback à l'utilisateur qui lui indique quand la re-calibration ou une autre opération est réalisée par le dispositif de détection de couleur ou lorsqu'il y a un changement prédéterminé de mesure de la lumière ambiante incidente.

4. Dispositif de détection de couleur selon la revendication 3, dans lequel le moyen de feedback comprend une ou plusieurs LEDs disposées sur le premier logement visibles par l'utilisateur.

5. Dispositif de détection de couleur selon la revendication 4, dans lequel les différentes couleurs des LED sont utilisées pour fournir un contenu supplémentaire de feedback.

6. Dispositif de détection de couleur selon la revendication 1 à 5, dans lequel le premier logement comprend un chemin optique qui capture la lumière ambiante de même nature et direction que celle sur la surface cible et qui la dirige vers le capteur de lumière ambiante.

7. Dispositif de détection de couleur selon la revendication 6, dans lequel le chemin optique comprend un élément de conduit de lumière configuré de façon à capturer la lumière ambiante incidente et à l'envoyer vers le capteur de lumière ambiante.

8. Dispositif de détection de couleur selon la revendication 1 à 7, comprenant également un second logement, le second logement pouvant être apposé sur un dispositif d'affichage et configuré de manière à recevoir de façon détachable le premier logement lorsque le dispositif n'est pas utilisé.

9. Procédé pour mesurer simultanément l'illumination de la lumière ambiante sur la surface cible (160) et les attributs de luminance émanant de la surface cible (160), le procédé est **caractérisé par** les étapes suivantes :
La disposition d'un bloc de chambre (145) ayant au moins trois passages de lumière (520) s'étendant à travers le bloc de chambre (145) configuré pour permettre l'entrée de lumière depuis la surface cible (160) et pour sélectionner un champ visuel préféré entre la surface cible (160) et les trois capteurs de lumière ou plus (170, 172, 174) adaptés pour détecter la lumière provenant de la surface cible (160) ;
La lecture de la luminance émanant de la surface cible (160) en utilisant lesdits trois capteurs de lumière ou plus (170, 172, 174) disposés dans le premier logement et orientés face à la surface cible (160), chaque capteur (170, 172, 174) étant configuré avec une lentille ; chaque passage lumineux (520) comprenant un orifice d'entrée (115) défini par une paroi d'entrée (120) définissant une entrée pour la lumière émise depuis la surface cible (160) dans le passage lumineux (520), un orifice de sortie (116) défini par une paroi de sortie (121) définissant une sortie pour la lumière émise depuis le passage lumineux (520) et une chambre (119) disposée entre la paroi d'entrée (120) et la paroi de sortie (121), la chambre étant définie par une paroi de chambre (122) ayant un diamètre supérieur à soit le diamètre de l'orifice d'entrée (120) et l'orifice de sortie (121), respectivement,
**caractérisé par** :
la lecture de la lumière ambiante incidente sur la surface cible (160) en utilisant un capteur de lumière ambiante (180) disposé dans le premier logement et orienté face à la lumière ambiante incidente sur la surface cible (160) sans qu'il n'y ait besoin de réorienter le premier logement par rapport à la surface cible (160),
**caractérisé en ce que** le capteur ambiant (180) lit en continu la lumière incidente pendant que les trois capteurs de lumière ou plus (170, 172, 174) lisent simultanément les attributs de lumière émanant de la surface cible (160) ; et
**caractérisé en ce que** le capteur de lumière ambiante (180) est disposé en arrière par rapport à l'un ou plusieurs capteurs de lumière (170, 172, 174) pour recevoir la lumière ambiante dirigée vers la surface cible (160).
